# EUROPÄISCHE PATENTSCHRIFT

(11) **EP 2 286 168 B1**
(45) Veröffentlichungstag und Bekanntmachung des Hinweises auf die Patenterteilung: **09.05.2012**
(21) Anmeldenummer: 09753888.8
(22) Anmeldetag: 26.05.2009
(51) Int. Cl.: F28D 20/00, F28D 7/00

(54) **VORRICHTUNG ZUM SPEICHERN VON THERMISCHER ENERGIE**
DEVICE FOR STORING THERMAL ENERGY
DISPOSITIF POUR LE STOCKAGE D'ÉNERGIE THERMIQUE

(30) Priorität: 30.05.2008 DE 102008026017; 16.09.2008 DE 102008047557
(43) Veröffentlichungstag der Anmeldung: 23.02.2011
(73) Patentinhaber: Ed. Züblin AG, 70567 Stuttgart (DE); Deutsches Zentrum für Luft- und Raumfahrt e.V., 51147 Köln (DE)
(72) Erfinder: BAHL, Carsten, 12205 Berlin (DE); BRAND, Thomas, 14471 Potsdam (DE); VOIGT, Thomas, 70794 Filderstadt (DE); BAUER, Thomas, 70178 Stuttgart (DE); FISS, Michael, 73240 Wendlingen (DE); LAING, Dörte, 70563 Stuttgart (DE)
(86) Internationale Anmeldenummer: PCT/EP2009/056396
(87) Internationale Veröffentlichungsnummer: WO 2009/144233

(56) Entgegenhaltungen:
- EP-A- 1 544 562
- WO-A-90/05271
- DE-A1- 10 211 598
- DE-A1- 10 350 879
- DE-A1- 19 632 017
- GB-A- 1 034 929

## Beschreibung

### Technisches Gebiet

Die Erfindung betrifft eine Vorrichtung und Anlage zum Speichern thermischer Energie gemäß dem Oberbegriff des Patentanspruchs 1.

### Stand der Technik:

Angesichts weltweit schwindender Primärrohstoffe als Ressourcen zur Energieerzeugung gewinnen regenerative oder alternative Konzepte immer mehr an Bedeutung. Beispielhaft sei die Nutzung von Sonnenenergie in solarthermischen Kraftwerken oder die Nutzung von Abwärme industrieller Fertigungsprozesse genannt. Da diese alternativen Energieformen jedoch an die Einstrahlung der Sonne oder an bestimmte industrielle Prozesse gekoppelt sind, ist deren jederzeitige Verfügbarkeit nicht gewährleistet. Deren praktische Verwendbarkeit hängt somit in starkem Maße von der Möglichkeit ab, die zu einem bestimmten Zeitpunkt anfallende Energie zwischenspeichern und zu einem späteren Zeitpunkt bereitstellen zu können. Der Speicherung thermischer Energie kommt somit eine zentrale Bedeutung bei der Entwicklung und Umsetzung alternative Konzepte zur Energiegewinnung zu.

Für den Niedertemperaturbereich bis etwa 100°C sind Wärmespeicher in Form von Wasserspeicher bekannt. Wasser als Wärmespeichermedium zeichnet sich durch seine hohe spezifische Wärmekapazität und geringe Kosten aus. Als Nachteil erweist sich jedoch das rasche Ansteigen des Dampfdruckes bei Temperaturen über 100°C, wodurch aufwendige Druckbehälter notwendig werden. Aus diesem Grund werden für höhere Temperaturbereiche Flüssigkeiten mit einem höheren Siedepunkt verwendet, wie zum Beispiel Öle, was jedoch eine deutliche Erhöhung der Kosten mit sich bringt.

Neben Flüssigspeichern sind auch schon Feststoffspeicher bekannt, die beispielsweise aus mineralischen Schüttstoffen aber auch aus Stahl, Guss, Schamott und dergleichen bestehen können. Während sich bei Stahl und Guss die hohen Kosten für das Speichermaterial als nachteilig erweisen, besitzen die übrigen Feststoffe aufgrund der geringen Wärmeleitfähigkeit nur eine beschränkt verfügbare Leistung.

In der WO 90/05271 A1 wird ein keramischer oder metallischer Feststoffwärmespeicher ebschrieben, bel dem die Wärmerohre vom Speichermaterial über einen mit einem thermisch leitjähigen Material gefüllten Spalt mechansch entkoppeit sind.

In der DE 102 11 598 A1 wird ein Speicherkörperaus einem Natursteinmaterall beschrieben, dessen Wärmerohre mit einem thermischen Leitkleber beschichtet sind.

In der DE 196 32 017 A1 wird für niedrige Temperaturen ein Speichersystem aus Dokument DE 10211598 zeigt den Oberbegriff konventionellen Betonsteinen beschrieben des Anspruchs 1.

Aufgabe der Erfindung:
Vor diesem Hintergrund liegt der Erfindung die Aufgabe zugrunde, einen Wärmespeicher mit einer möglichst hohen Wärmekapazität und hohen Be- und Entladeleistung zu schaffen, der sowohl eine zuverlässige als auch wirtschaftliche Speicherung thermischer Energie erlaubt.

Darstellung der Erfindung:
Diese Aufgabe wird durch eine Vorrichtung mit den Merkmalen des Patentanspruchs 1. Vorteilhafte Weiterbildungen ergeben sich aus den Unteransprüchen.

Die Erfindung baut auf dem Gedanken auf thermische Energie in einem Feststoffspeicher zu speichern. Die Eintragung der thermischen Energie in den Feststoffspeicher erfolgt über ein gasförmiges oder flüssiges Energieträgermedium, das innerhalb eines Rohrleitungssystems geführt ist.

Als Material für den Feststoffspeicher wird Beton verwendet, da dieser überall und kostengünstig zur Verfügung steht und sich mit Beton auch komplexe Formen herstellen lassen. Durch Verwendung geeigneter Zuschlagsstoffe, Zemente, Zusatzstoffe, Zusatzmittel und Beimischung von Additiven besteht ferner die Möglichkeit den Beton des

Feststoffspeichers an die jeweiligen Erfordernisse anzupassen. In der Erfindung ist durch Vorsehen konstruktiver Maßnahmen das schadlose Ableiten des bei der Aufheizung des Betons des Feststoffspeichers freiwerdenden Wassers begünstigt werden. Gemäß vorteilhafter Ausführungsformen der Erfindung werden hierzu folgende Möglichkeiten vorgeschlagen, die alternativ oder kumulativ angewandt werden können:
a) Eine erste Möglichkeit besteht in der Herstellung des Betons für den Feststoffspeicher mit einem Wasser-Zement-Wert von 0,5 oder höher, wodurch die Permeabilität des Speicherbetons erhöht wird.
b) Eine andere Möglichkeit besteht in der Zugabe von Fasern aus schmelzbaren Materialien wie zum Beispiel Wachsen oder geeigneten Kunststoffen, die bei der ersten Inbetriebnahme des Wärmespeichers schmelzen und mit den zurückbleibenden Hohlräumen die Permeabilität des Betons erhöhen.
c) Zur Ableitung des Wasserdampfes ist es auch möglich, beim Betonieren des Feststoffspeichers Bereiche mit erhöhter Permeabilität oder Strömungskanäle vorzusehen, welche durch Aufnahme und Ableitung des Dampfes zu einer Entspannung innerhalb des Feststoffspeichers führen.
d) Eine andere Möglichkeit Hohlräume im Feststoffspeicher zu schaffen, besteht in der Verwendung von Formkörpern aus schmelzbaren Materialien wie zum Beispiel Wachse oder geeignete Kunststoffe. Diese schmelzen bei der ersten Inbetriebnahme des Wärmespeichers und hinterlassen auf diese Weise lokale Dampfströmungs- und Dampfentspannungszonen.
e) Eine weitere Variante sieht das Einbetonieren von Formkörpern vor, die eine gegenüber dem Beton des übrigen Feststoffspeichers größere Permeabilität besitzen. Solche Formkörper, beispielsweise sandgefüllte Textilschläuche oder Betonfertigteile aus Einkombeton, können dauerhaft im Feststoffspeicher verbleiben und bewirken dort ebenfalls eine Ableitung oder Entspannung des Dampfes.

Eine zumindest bereichsweise erhöhte Permeabilität des Feststoffspeichers erlaubt es, diesen größer zu dimensionieren, ohne dass sich infolge der damit einhergehenden Zunahme des Strömungswegs ein zu hoher betonschädigender Dampfdruck entwickelt.

Die Eintragung der thermischen Energie in den Feststoffspeicher erfolgt über ein gasförmiges oder flüssiges Energieträgermedium, das innerhalb eines Rohrleitungssystems geführt ist. Die das Rohrleitungssystem bildenden Einzelrohre durchsetzen dabei den Feststoffspeicher in achsparalleler Lage, so dass ein über den Querschnitt des Feststoffspeichers gleichmäßiger Energieeintrag erreicht wird. Ein solches Rohrleitungssystem kann als Rohrregister vorgefertigt oder vor Ort hergestellt werden. Nach Stellung der Schalung wird dieses Rohrregister einbetoniert, wobei durch nachfolgend noch beschriebene Maßnahmen gleichzeitig eine mechanische Entkopplung von Rohrregister und Feststoffspeicher erreicht wird. Daraus ergibt sich eine einfache und äußerst kostengünstige Herstellung eines erfindungsgemäßen Wärmespeichers.

Um einen möglichst gleichmäßigen Eintrag der thermischen Energie in den Feststoffspeicher zu erreichen, verlaufen die Einzelrohre des Rohrleitungssystems innerhalb des Feststoffspeichers in einem vorgegebenen Raster, bei dem die Einzelrohre in planparallelen Ebenen angeordnet sind. Die Ebenen können dabei im Hinblick auf die Lage der Rohre deckungsgleich oder mit einem seitlichen Versatz von Ebene zu Ebene angeordnet sein. Um einen Einbau der Rohre mit einem gleichmäßigen Abstand zu gewährleisten, werden Abstandshalter verwendet.

Gemäß einer vorteilhaften Ausführungsform der Erfindung schließt das Rohrleitungssystem an seinen beiden Längsenden mit jeweils einer Stirnplatte ab, die mit Durchgangsöffnungen für die Einzelrohre versehen ist. Dabei ist zwischen den Stirnplatten und den Stirnflächen des Feststoffspeichers ein definierter freier Abstand eingehalten, der Zwängungen infolge temperaturbedingter unterschiedlicher Dehnungen vorbeugt.

Das Verteilen bzw. Sammeln des Energieträgermediums an der Außenseite der Stirnplatten nach dessen Eintritt in bzw. Austritt aus den Einzelrohren wird bevorzugterweise durch Halbschalen bewerkstelligt, die entlang ihrer Längsränder unter Bildung von Kanälen mit den Stirnplatten verschweißt sind und dabei jeweils mehrere Durchgangsöffnungen erfassen.

Ein weiterer Grundgedanke der Erfindung besteht darin, den Feststoffspeicher vom Rohrregister durch Vorsehen eines Spalts oder einer Gleitschicht zwischen diesen beiden Elementen mechanisch zu entkoppeln. Damit gelingt es Zwängungen zu verhindern, die bedingt durch unterschiedliche thermische Beaufschlagung und unterschiedliche Dehnungskoeffizienten von Feststoffspeicher und Rohrregister zu Schäden bis hin zu einem Betriebsausfall des Wärmespeichers führen können. Für die Erzeugung eines Spalts bzw. Gleitschicht kommen folgende Varianten in Frage:
a) Beschichtung, Umhüllung oder Umwicklung der Rohre des Rohrregisters mit schmelzenden Materialien, z.B. Polyethylen, Polypropylen, Zink, Zinn:
   Infolge der relativ geringen Schmelztemperaturen (z.B. Polyethylen ca. 110°C; Polypropylen ca. 160°C) stellt sich schon zu Beginn der Aufheizung eine Entkoppelung zwischen Rohr und Beton ein, indem die schmelzenden Materialien zunächst in einen plastifizierten Übergangszustand gehen, der Relativbewegungen zwischen Rohrregister und Feststoffspeicher bereits ermöglicht, bevor sie nach Erreichen des flüssigen Aggregatszustands einen Spalt zwischen Rohre und Feststoffspeicher hinterlassen. Um trotz Spalt eine hohe Wärmeübertragung zu gewährleisten, ist es von Vorteil die Dicke des Spalts möglichst gering zu wählen, beispielsweise zwischen 0,1 mm und 0,5 mm, vorzugsweise 0,2 mm. Die Beschichtung der Rohre kann mit großtechnisch eingesetzten Anlagen kostengünstig erfolgen.
b) Installation einer Gleitschicht zwischen den Rohren der Rohrregisters und dem Beton des Feststoffspeichers, z.B. Beschichtung mit graphithaltigen Material:
   Bei dieser Variante wird zur Sicherstellung eines optimalen Wärmeübergangs vom Rohr auf den Feststoffspeicher der Spalt mit einem festen, gut wärmeleitfähigen Material gefüllt, z.B. einem graphithaltigen Material. Dieses Material zeichnet sich einerseits durch seine hohe Wärmeleitfähigkeit und andererseits durch seinen geringen Reibungsbeiwert und seine Verformbarkeit aus. Auf diese Weise gelingt es, die sich zunächst widersprechenden Forderungen nach einer mechanischen Entkoppelung einerseits und eines optimalen Wärmeübergangs andererseits zur Lösung der gestellten Aufgabe zu vereinen. Von besonderem Vorteil im Hinblick auf die Herstellung eines erfindungsgemäßen Wärmespeichers wird expandiertes Graphit verwendet. Dieses kann beispielsweise in Folienform als Beschichtung auf das Rohrleitungssystem aufgebracht werden. Eine Fixierung auf dem Rohrleitungssystem kann durch eine selbstklebende Rückseite der Graphitfolie, die Aufbringung eines Klebers auf dem Rohr und / oder auf der Graphitfolie oder durch eine zusätzliche äußere Fixierung erfolgen. Durch anschließendes Einbetonieren des so vorbereiteten Rohrsystems ist der Spalt zwischen Feststoffspeicher und Rohrleitungssystem komplett gefüllt. Die Dicke der Beschichtung beträgt beispielsweise 0,2 mm bis 3 mm, vorzugsweise 0,5 mm.

Um Wärmeverluste möglichst gering zu halten, ist der Wärmespeicher vorzugsweise mit einer Wärmedämmung umgeben.

Gemäß der Erfindung ist es möglich zur Bildung größerer Speichereinheiten mit größeren Speicherkapazitäten derartige Wärmespeicher modulartig in Reihe und/oder parallel zusammenzuschließen. Dies hat den Vorteil, dass bereits bei der Planung aber auch nachträglich durch Variation in der Anzahl und Größe der einzelnen Wärmespeicher eine Anpassung an unterschiedliche Speichervolumina vorgenommen werden kann. Bei dieser Ausführungsform der Erfindung kann auf die Ausbildung der Sammler und Verteiler zwischen den einzelnen Wärmespeichern verzichtet und statt dessen die einzelnen Rohre zweier in Reihe geschalteter Rohrregister mit entsprechend gebogenen Verbindungsrohren bzw. mit speziellen Verbindungsschläuchen verbunden werden, die die Dehnungen der Registerrohre bei Temperaturänderungen kompensieren.

Nachstehend wird anhand eines in den Zeichnungen dargestellten Beispiels ein Weg zur Ausführung der Erfindung näher erläutert, ohne sich jedoch auf die darin konkret offenbarten Merkmalskombinationen einzuschränken. Vielmehr liegen auch nicht explizit beschriebene Kombinationen der vorstehend beschriebenen Merkmale im Rahmen der Erfindung, soweit sie an den Sinn und Zweck der Erfindung anknüpfen.

Es zeigen:
Fig. 1 eine Schrägansicht auf einen erfindungsgemäßen Wärmespeicher,
Fig. 2 einen Längsschnitt durch den in Fig. 1 dargestellten Wärmespeicher,
Fig. 3 einen Querschnitt durch den in Fig. 2 dargestellten Wärmespeicher entlang der Linie III - III,
Fig. 4 eine Stirnansicht auf den in den Fig. 1 und 2 dargestellten Wärmespeicher,
Fig. 5 ein Detail des in Fig. 3 dargestellten Querschnitts und
Fig. 6 ein Detail des in Fig. 2 dargestellten Längsschnitts.
Fig. 7 eine Schrägansicht auf einen Gesamtspeicher und
Fig. 8 ein Detail der Verbindung zweier in Reihe geschalteter einzelner Wärmespeicher.

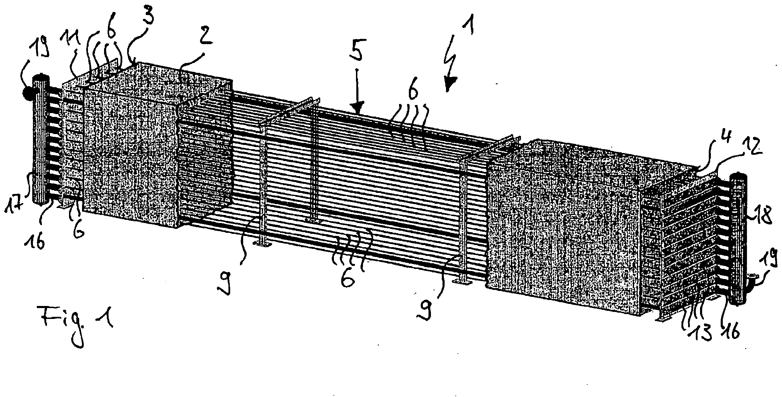

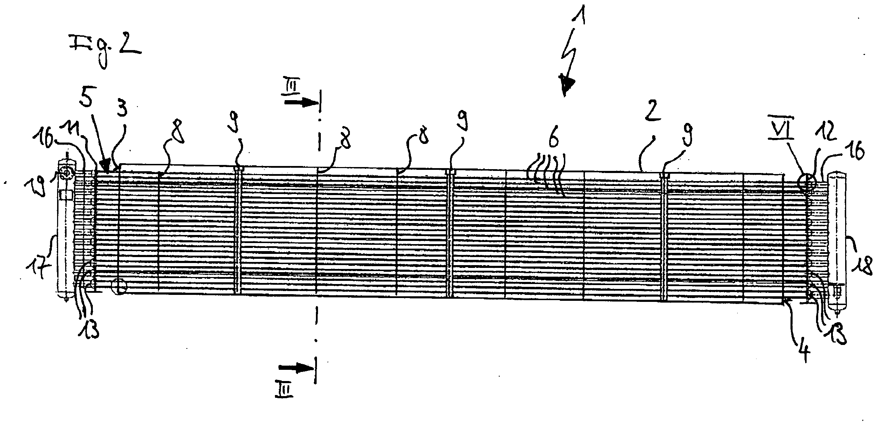

Fig. 1 zeigt einen erfindungsgemäßen Wärmespeicher 1 in einer Schrägansicht, die Fig. 2 bis 4 in den dazugehörigen Schnitten und einer Ansicht. Als wesentliches Element des Wärmespeichers 1 sieht man einen quaderförmigen Feststoffspeicher 2 mit ausgeprägter Längserstreckungsrichtung, dessen Längsenden von den Stirnflächen 3 und 4 gebildet werden. Der Feststoffspeicher 2 ist aus Beton hergestellt, was sowohl in Ortbetonbauweise als auch mit Betonfertigteilen geschehen kann. Die Abmessungen des Wärmespeichers 1 sind nicht festgelegt und werden in Abhängigkeit des jeweiligen Anwendungszwecks bestimmt. Eine bevorzugte Ausführungsform eines Wärmespeichers 1 besitzt eine Länge von etwa 18 m, eine Höhe von etwa 4 m und eine Breite von etwa 2,5 m bis 3 m.

Ein weiteres wesentliches Element der Erfindung stellt das mit 5 gekennzeichnete Rohrleitungssystem dar, das sich aus einer Vielzahl von Einzelrohren 6 zusammensetzt. Die Einzelrohre 6 durchziehen den Feststoffspeicher 2 in seiner Längserstreckungsrichtung in achsparalleler Lage, was in Fig. 1 durch Weglassung des Feststoffspeichers 2 über einen mittleren Längsabschnitt deutlich gemacht ist. Die Einzelrohre 6 reichen dabei unter Bildung eines Überstands über die Stirnflächen 3 und 4 hinaus.

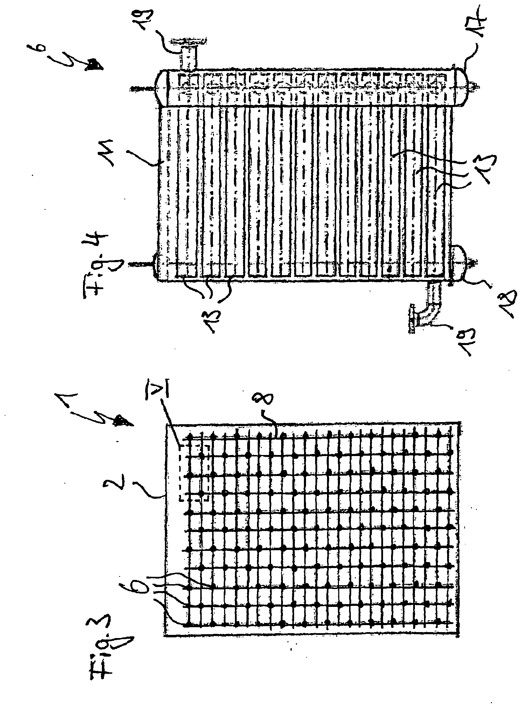

Wie vor allem aus Fig. 3 ersichtlich, sind die Einzelrohre 6 in einer Vielzahl horizontaler, planparallel übereinander liegenden Ebenen äquidistant angeordnet, wobei die Einzelrohre 6 zweier benachbarter Ebenen einen seitlichen Versatz um den halben horizontalen Abstand zweier Einzelrohre 6 aufweisen können. Auf diese Weise ergibt sich eine gleichmäßige Verteilung der Einzelrohre 6 über den Querschnitt des Feststoffspeichers 2, die eine gleichmäßige Einleitung der thermischen Energie in den Feststoffspeicher 2 zur Folge hat. Zur Einhaltung des oben beschriebenen Rasters über die gesamte Länge der Einzelrohre 6 sind innerhalb des Feststoffspeichers 2 in vorgegebenen Längsabständen in jeweils einer Querschnittsebene Abstandshalter aus Stahlmatten 8 angeordnet, deren Quer- und Längsstäbe dem vorgegebenen Raster entsprechen und die zur Befestigung der Einzelrohre 6 dienen, In größeren Längsabständen sind einzelne Stahlmatten 8 zusätzlich durch Profilrahmen 9 verstärkt und gehalten (Fig. 1, 2 und 3).

Die Einzelrohre 6 enden wie schon beschrieben in Querschnittsebenen, die im lichten Abstand zu den Stirnflächen 3 und 4 verlaufen, beispielsweise im Abstand von 40 cm. In diesen Querschnittsebenen, also planparallel zu den Stirnflächen 3 und 4, sind Stirnplatten 11 und 12 angeordnet, die mit Durchgangsöffnungen 10 entsprechend dem Raster der Einzelrohre 6 versehen sind.

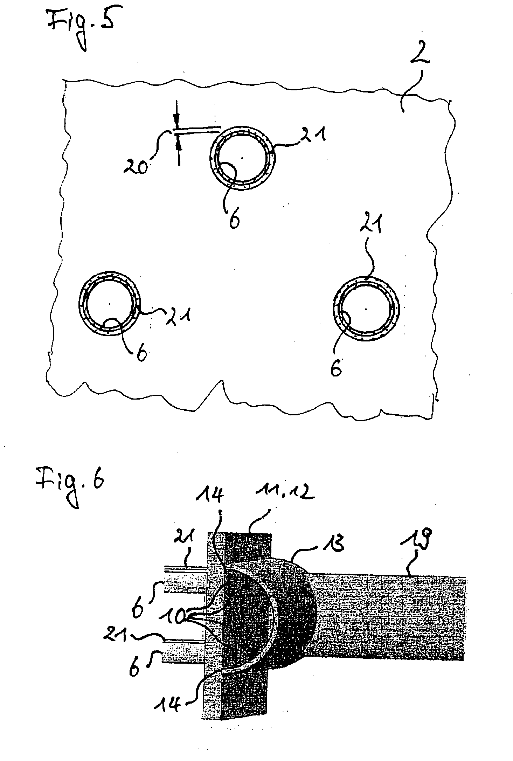

Aus den Fig. 5 und 6 geht hervor, dass die Einzelrohre 6 an der Rückseite der Stirnplatten 11 und 12 in die Öffnungen 10 münden und dort mit den Stirnplatten 11 und 12 dicht verschweißt sind. Auf der gegenüberliegenden Vorderseite der Stirnplatten 11 und 12 sieht man eine Vielzahl von Halbschalen 13, die in horizontaler Lage und achsparallel mit ihren Längsrändern 14 mit den Stirnplatten 11 und 12 verschweißt sind, so dass die Halbschalen 13 zusammen mit den Stirnplatten 11 und 12 horizontale Kanäle 15 bilden. Die relative Lage der Halbschalen 13 ist dabei so gewählt, dass jeweils die Einzelrohre 6 zweier übereinander liegender Ebenen über die Öffnungen 10 in einen einzigen Kanal 15 münden. Alle Kanäle 15 sind über Zwischenrohrstücke 16 an einen Verteiler 17 bzw. Sammler 18 angeschlossen, die jeweils mit einem Anschlussstutzen 19 für den Zu- bzw. Ablauf des Wärmespeichers 1 ausgestattet sind (Fig. 2).

Für eine vereinfachte und wirtschaftliche Herstellung des Wärmespeichers 1 werden die Einzelrohre 6, Stahlmatten 8, Profilrahmen 9, Stirnplatten 11 und 12, Halbschalen 13, Zwischenrohre 16, Verteiler 17, Sammler 18 und Anschlussstutzen 19 als Rohrregister vorgefertigt. Die Herstellung des Wärmespeichers 1 erfolgt dann in einfacher Weise durch Stellung der Schalung und Betonieren des Feststoffspeichers 2.

Damit es dabei zu keinem kraftschlüssigen Verbund zwischen dem Beton des Feststoffkörpers 2 und den Einzelrohren 6 kommt, ist zur mechanischen Entkopplung zwischen den Einzelrohren 6 und dem Feststoffkörper 2 ein Spalt 20 vorgesehen, der - wie im vorliegenden Ausführungsbeispiel gezeigt - von einem festen, gut wärmeleitfähigen und verformbaren Material 21 ausgefüllt sein kann (Fig. 5). Im vorliegenden Beispiel besteht das feste, gut wärmeleitfähige und verformbare Material 21 aus expandiertem Graphit in Folienform, das auf einer Seite selbstklebende Eigenschaften besitzt und so vor dem Betonieren auf einfache Art und Weise durch Umwickeln eng am Außenumfang der Einzelrohre 6 angebracht werden kann. Beim Einbringen des Betons für den Feststoffkörper 2 erfolgt somit ein Formschluss zum festen, gut wärmeleitfähigen und verformbaren Material 21. Auf diese Weise ist gewährleistet, dass Relativbewegungen zwischen den Einzelrohren 6 und dem Feststoffspeicher 2 nicht behindert werden, gleichzeitig aber ein optimaler Wärmeübergang von den Einzelrohren 6 auf den Feststoffspeicher 2 erhalten bleibt.

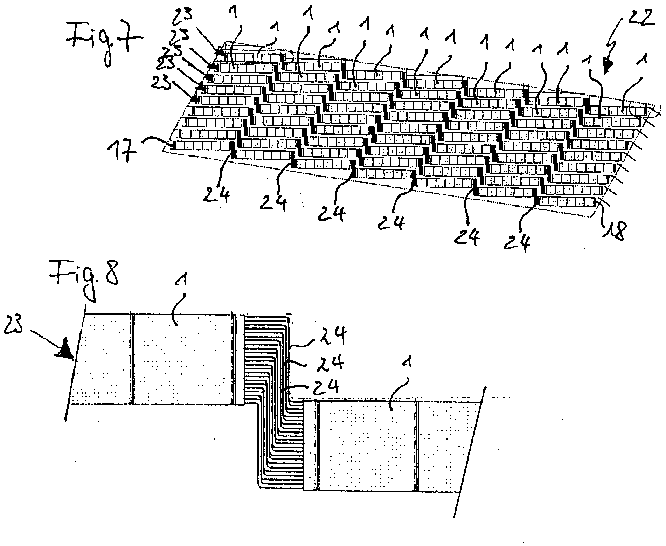

Der unter den Fig. 1 bis 6 beschriebene Wärmespeicher 1 kann sowohl als Einzelspeicher zur Aufnahme thermischer Energie dienen als auch Teil eines modular aufgebauten Gesamtspeichers sein. Ein solcher in Figur 7 dargestellter Gesamtspeicher 22 besteht dann aus einer Vielzahl in Reihe oder parallel geschalteter einzelner Wärmespeicher 1, die in der Darstellung von links nach rechts vom Wärmeträgermedium durchströmt sind. Eine Anpassung der Speicherkapazität des Gesamtspeichers 22 an die gegebenen Anforderungen wird durch geeignete Auswahl der Größe und/oder Anzahl der Wärmespeicher 1 vorgenommen. Im vorliegenden Beispiel besteht der Gesamtspeicher 22 aus neun parallel verlaufenden und parallel beschickten Speichersträngen 23, die jeweils von sieben in Reihe geschalteten Wärmespeichern 1 gebildet werden.

Zwei benachbarte Wärmespeicher 1 eines Speicherstranges 23 sind wie in Figur 8 im Detail gezeigt miteinander verbunden. Dabei werden die einander zugeordneten Einzelrohre 6 der beiden Rohrregister jeweils mittels zweimal um etwa 90 Grad gekröpfter Rohrbögen 24 oder Schläuchen verbunden. Durch die S-Form der Rohrbögen 24 bzw. die Flexibilität der Schläuche werden Dehnungen der Einzelrohre 6 bei Temperaturänderung kompensiert. Bei dieser Konstruktionsweise ist es möglich auf die Ausbildung von Sammlern und Verteilem zwischen den jeweiligen Wärmespeichern 1 zu verzichten. Ein Verteiler 17 ist lediglich am Anfang und ein Sammler 18 am Ende eines Stranges 23 vorhanden (Fig. 7).

### Bezugszeichenliste:

- 1: Wärmespeicher
- 2: Feststoffspeicher
- 3: Stirnfläche
- 4: Stirnfläche
- 5: Rohrleitungssystem
- 6: Einzelrohr
- 7: - *unbesetzt* -
- 8: Stahlmatte
- 9: Profilrahmen
- 10: Öffnung
- 11: Stirnplatte
- 12: Stirnplatte
- 13: Halbschale
- 14: Längsrand
- 15: Kanal
- 16: Zwischenrohrstück
- 17: Verteiler
- 18: Sammler
- 19: Anschlussstutzen
- 20: Spalt
- 21: wärmeleitfähiges Material
- 22: Gesamtspeicher
- 23: Speicherstrang
- 24: Rohrbogen

## Patentansprüche

1. Vorrichtung zum Zwischenspeichern thermischer Energie mit einem Feststoffspeicher (2) aus Beton und mit einem von Einzelrohren (6) gebildeten Rohrleitungssystem (5), wobei das Rohrleitungssystem (5) den Feststoffspeicher (2) durchzieht und wobei das Rohrleitungssystem (5) von einem Energieträgermedium durchströmt ist,
und wobei der Feststoffspeicher (2) und das Rohrieitungssystem (5) voneinander mechanisch entkoppelt Sind, wobei zur mechanischen Entkopplung jeweils ein Spalt (20) zwischen Feststoffspeicher (2) und einem Einzelrohr (6) vorgesehen ist, der dauerhaft von einem wärmeleitfähigen Material (21) ausgefüllt ist,
**dadurch gekennzeichnet, dass** er konstruktive Maßnahmen aufweist, die das schadlose Ableiten des beim Aufheizen des Betons freiwerdenden Wassers ermöglichen.

2. Vorrichtung nach Anspruch 1,
**dadurch gekennzeichnet, dass**
- der Beton hierzu einen Wasser-Zementwert von 0,5 oder höher aufweist, wodurch seine Permeabilität für Wasserdampf erhöht wird, oder und
- der Beton vor der ersten Inbetriebnahme des Speichers Fasern aus schmelzbaren Materialien enthält, die bei der ersten Inbetriebnahme schmelzen und deren zurückbleibende Hohlräume dann die Permeabilität erhöhen, oder und
- der Beton bereits direkt nach der Herstellung Bereiche erhöhter Permeabilität oder Strömungskanäle aufweist, welche den entstehenden Wasserdampf ableiten, oder und
- der Beton vor der ersten Inbetriebnahme Formkörper aus schmelzbaren Materialien enthält, die nach der Inbetriebnahme lokale Dampfströmungs- und Dampfentspannungszonen bilden, oder und
- der Beton einbetonierte Formkörper enthält, die eine gegenüber dem Beton des übrigen Feststoffspeichers größere Permeabilltät aufweisen.

3. Vorrichtung nach Anspruch 2,
**dadurch gekennzeichnet, dass** die schmelbaren Fasern aus Kunststoffen oder Wachsen bestehen und es sich bei den nicht schmelzbaren Formkörpern um sandgefüllte Textilschläuche oder Fertigteile aus Einkornbeton handelt.

4. Vorrichtung nach einem der Ansprüche 1 bis 3,
**dadurch gekennzeichnet, dass** das wärmeleitfähige Material (21) aus Graphit besteht, vorzugsweise expandiertem Graphit.

5. Vorrichtung nach einem der Ansprüche 1 bis 4.
**dadurch gekennzeichnet, dass** das wärmeleitfähige Material (21) als Beschichtung auf der Oberfläche der Einzelrohre (6) angeordnet ist, vorzugsweise als Folie.

6. Vorrichtung nach einem der Ansprüche 1 bis 5,
**dadurch gekennzeichnet, dass** die Dicke des wärmeleitfähigen Materials (21) zwischen 0,2 mm und 3 mm liegt, vorzugsweise 0,5 mm beträgt.

7. Vorrichtung nach einem der Ansprüche 1 bis 6,
**dadurch gekennzeichnet, dass** die Einzelrohre (6) mit seitlichem Abstand in mehreren planparallelen Ebenen angeordnet sind, wobei die Einzelrohre (6) einer Ebene deckungsgleich oder mit seitlichem Versatz zu den Einzelrohren (6) einer benachbarten Ebene verlaufen.

8. Vorrichtung nach einem der Ansprüche 1 bis 7,
**dadurch gekennzeichnet, dass** die Einzelrohre (6) einer Ebene einen gegenseitigen Abstand zwischen 30 mm und 250 mm aufweisen, vorzugsweise von etwa 120 mm.

9. Vorrichtung nach Anspruch 7 oder 8,
**dadurch gekennzeichnet, dass** die Ebenen (6) einen gegenseitigen Abstand von 30 mm bis 250 mm aufweisen, vorzugsweise von etwa 70 mm.

10. Vorrichtung nach einem der Ansprüche 1 bis 9,
**dadurch gekennzeichnet, dass** das Rohrleitungssystem (5) endseitig jeweils mit einer Stirnplatte (11, 12) abschließt, die mit Durchgangsöffnungen (10) versehen ist, in die die Enden der Einzelrohre (6) münden.

11. Vorrichtung nach Anspruch 10,
**dadurch gekennzeichnet, dass** die Stirnplatten (11, 12) im lichten Abstand zum Feststoffspeicher (2) angeordnet sind.

12. Vorrichtung nach Anspruch 10 oder 11,
**dadurch gekennzeichnet, dass** an der dem Feststoffspeicher (2) abgewandten Außenseite der Stirnplatten (11, 12) Halbschalen befestigt sind, die zusammen mit den Stirnplatten (11, 12) Kanäle (15) bilden, in die die Einzelrohre (6) über die Öffnungen (10) jeweils gruppenweise münden.

## Claims

1. A device for the temporary storage of thermal energy with a solid storage device (2) made of concrete and a piping system (5) composed of individual pipes (6), wherein the piping system (5) runs through the solid storage device (2) and wherein an energy carrier medium flows through the piping system (5),
and wherein the solid storage device (2) and the piping system (5) are mechanically decoupled from each other, wherein a gap (20) permanently filled with heat-conductive material (21) is provided for the respective mechanical decoupling between the solid storage device (2) and an individual pipe (6),
**characterized in that** it comprises constructional measures which enable the harmless discharge of the water released during heating up of the concrete.

2. A device according to claim 1,
**characterized in that**
- said concrete has a water/cement value of 0.5 or more, whereby its permeability to water vapour is increased, or **in that**
- prior to the first operational use of the storage device the concrete contains fibres of meltable materials which melt during the first operational use and whose residual cavities then increase the permeability, or **in that**
- directly after manufacture the concrete already comprises areas of increased permeability or flow channels which discharge the resulting water vapour, or **in that**
- prior to the first operational use the concrete contains mouldings of meltable materials which form local vapour flow and vapour expansion zones after operational use, or **in that**
- the concrete contains concreted-in mouldings which possess a greater permeability as against the concrete of the rest of the solid storage device.

3. A device according to claim 2,
**characterized in that** the meltable fibres are made of plastics or waxes and the non-meltable mouldings are composed of sand-filled textile hoses or precast parts made of like-grained concrete.

4. A device according to one of claims 1 to 3,
**characterized in that** the heat-conductive material (21) consists of graphite, preferably expanded graphite.

5. A device according to one of claims 1 to 4,
**characterized in that** the heat-conductive material (21) is arranged as a coating on the surface of the individual pipes (6), preferably as a foil.

6. A device according to one of claims 1 to 5,
**characterized in that** the thickness of the heat-conductive material (21) lies between 0.2 mm and 3 mm, preferably amounting to 0.5 mm.

7. A device according to one of claims 1 to 6,
**characterized in that** the individual pipes (6) are arranged with a lateral distance on several plane-parallel levels, wherein the individual pipes (6) of one level run coincident with or laterally offset to the individual pipes (6) of a neighbouring level.

8. A device according to one of claims 1 to 7,
**characterized in that** the individual pipes (6) of one level exhibit a mutual distance between 30 mm and 250 mm, preferably about 120 mm.

9. A device according to claim 7 or 8,
**characterized in that** the levels (6) exhibit a mutual distance of 30 mm to 250 mm, preferably about 70 mm.

10. A device according to one of claims 1 to 9,
**characterized in that** the piping system (5) terminates at each end with a face plate (11, 12) which is provided with passage openings (10) into which the ends of the individual pipes (6) abut.

11. A device according to claim 10,
**characterized in that** the face plates (11, 12) are arranged with a clear distance to the solid storage device (2).

12. A device according to claim 10 or 11,
**characterized in that** on the outer side of the face plates (11, 12), pointing away from the solid storage device (2), there are half-shells mounted which, together with the face plates (11,12), form channels (15) into which the individual pipes (6) abut in respective groups via the openings (10).

## Revendications

1. Dispositif pour le stockage intermédiaire d'énergie thermique avec un réservoir à solide (2) en béton et avec un système de conduites (5) formé de tuyaux distincts (6), tout en notant que le système de conduites (5) traverse le réservoir à solide (2) et que le système de conduites (5) est traversé par un milieu vecteur d'énergie,
et tout en notant que le réservoir à solide (2) et le système de conduites (5) sont mécaniquement découplés l'un de l'autre et que pour ce découplage mécanique il est respectivement prévu un interstice (20) entre le réservoir à solide (2) et un tube distinct (6), qui est rempli durablement d'un matériel à conductibilité thermique (21), **caractérisé en ce qu'**il présente des mesures constructives qui permettent d'en dériver sans dommage de l'eau libérée lors du réchauffage du béton.

2. Dispositif selon la revendication 1,
**caractérisé en ce que**
- le béton présente une valeur ciment-eau de 0,5 ou plus élevée, ce qui augmentera sa perméabilité pour la vapeur d'eau, ou bien
- le béton contient, dès la première mise en service du réservoir, des fibres en matériaux fusibles, qui fondent dès la première mise en service et dont les corps creux résiduels augmentent alors la perméabilité, ou bien
- le béton présente directement après la fabrication des zones de perméabilité accrue ou des canaux d'écoulement, qui évacuent la vapeur d'eau formée ou bien
- le béton avant la première mise en service contient des corps moulés en matériaux fusibles, qui forment après la mise en service des zones locales de flux de vapeur et des zones de détente pour la vapeur, ou bien
- le béton comporte des corps moulés pris dans le béton, qui présente une plus grande perméabilité par rapport au béton du réservoir à solide résiduel.

3. Dispositif selon la revendication 2,
**caractérisé en ce que** les fibres fusibles se composent de matières plastiques ou de cire et qu'il s'agit pour les corps solides non fusibles de flexibles textiles remplis de sable ou de pièces préfabriquées en béton monogranulaire.

4. Dispositif selon l'une des revendications 1 à 3,
**caractérisé en ce que** le matériau à conductibilité thermique (21) se compose de graphite, de préférence de graphite expansé.

5. Dispositif selon l'une des revendications 1 à 4,
**caractérisé en ce que** le matériau à conductibilité thermique (21) soit apposé sous forme de revêtement sur la surface des différents tuyaux (6), de préférence sous forme de film souple.

6. Dispositif selon l'une des revendications 1 à 5,
**caractérisé en ce que** l'épaisseur du matériau à conductibilité thermique (21) est comprise entre 0,2 mm et 3 mm, de préférence 0,5 mm.

7. Dispositif selon l'une des revendications 1 à 6,
**caractérisé en ce que** les différents tuyaux (6) sont disposés avec un écart latéral dans plusieurs plans parallèles tout en notant que les différents tuyaux (6) d'un même plan sont disposés en recouvrement ou avec un décalage latéral par rapport aux différents tuyaux d'un plan voisin.

8. Dispositif selon l'une des revendications 1 à 7,
**caractérisé en ce que** les différents tuyaux (6) d'un même plan présentent un écart mutuel compris entre 30 mm et 250 mm, de préférence 120 mm environ.

9. Dispositif selon la revendication 7 ou 8,
**caractérisé en ce que** les plans (6) présentent un écart mutuel compris entre 30 mm et 250 mm, de préférence 70 mm environ.

10. Dispositif selon l'une des revendications 1 à 9,
**caractérisé en ce que** le système de conduites (5) est fermé à chaque extrémité par une plaque frontale (11, 12) dotée d'ouvertures de passage (10) qui aboutissent à l'extrémité des différents tuyaux (6).

11. Dispositif selon la revendication 10,
**caractérisé en ce que** les plaques frontales (11, 12) sont disposées à un écart intérieur par rapport au réservoir à solide (2).

12. Dispositif selon la revendication 10 ou 11,
**caractérisé en ce que** sur le côté extérieur des plaques frontales (11, 12) tourné vers le réservoir à solide (2) sont fixées des demi-coques qui constituent avec les plaques frontales (11, 12) des canaux (15) dans lesquels les différents tuyaux (6) aboutissent respectivement en groupes par le biais des ouvertures (10).
